(19) Europäisches Patentamt
European Patent Office
Office européen des brevets

(11) **EP 1 940 176 A2**

(12) **EUROPEAN PATENT APPLICATION**

(43) Date of publication:
**02.07.2008 Bulletin 2008/27**

(51) Int Cl.:
*H04N 7/26* (2006.01)    *H04N 7/50* (2006.01)

(21) Application number: **07120136.2**

(22) Date of filing: **07.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **28.12.2006 EP 06027030**
**08.06.2007 EP 07011265**

(71) Applicant: **SIEMENS AKTIENGESELLSCHAFT**
**80333 München (DE)**

(72) Inventors:
• **Li, Xiang**
**100080 Beijing (CN)**
• **Hutter, Andreas**
**81673 München (DE)**
• **Kaup, André**
**91090 Effeltrich (DE)**

(54) **Method and device for coding a sequence of digitized images**

(57)    This invention relates to a method and device that are using a Lagrange cost function for optimizing rate and distortion for coding of digitized images. Both the distortion and the rate model used for coding of a present image are based on a probability distribution of transformed residual coefficients of a previously coded image, on a quantization interval and on a rounding offset of the quantization interval of the respective image. The rate model is based on an entropy for the quantized non-zero coefficients of the previously coded image, whereby the entropy is generated using the probability distribution, the quantization interval and the rounding offset.

FIG 1

$$M1\ (f_L(x),\ Q,\ F,\ R,\ D,\ S,\ H,\ P_0,\ P_n,\ P_S,\ \delta,\ \lambda_L,\ c,\ \phi,\ \gamma,\ \lambda_{HR},\ \lambda)$$

EP 1 940 176 A2

**Description**

This invention relates to a method and a device for coding a sequence of digitized images.

In video coding an optimization of distortion versus rate is of high importance. A weak optimization results either in a low image quality at a given rate or in an unnecessary high rate for a given image quality. This also means that if the optimization is very good a high image quality at a low bit rate can be achieved.

A target of the rate-distortion optimization is to minimize the distortion $D$ for a given rate $R_c$ of rate $R$, by appropriate selections of coding parameters, as shown by equation (1).

$$min\{D\}$$
$$by \ R \leq R_c \tag{1}$$

The requirement of equation (1) can be solved using a Lagrange multiplier method or a dynamic programming [1] method. The Lagrange multiplier method represents equation (1) as

$$min\{J\}$$
$$where \ J \ = \ D \ + \ \lambda \cdot R \tag{2}$$

whereby $J$ is the Lagrangian cost function and $\lambda$ is the so-called Lagrange multiplier. Consequently, how to determine $\lambda$ becomes a key problem in rate-distortion optimization. Supposing the rate $R$ and the distortion $D$ is differentiable everywhere, the minimum of the Lagrangian cost function $J$ is given by setting its derivative to zero, i.e.

$$\frac{dJ}{dR} \ = \ \frac{dD}{dR} \ + \ \lambda \ = \ 0 \tag{3}$$

leading to

$$\lambda \ = \ - \frac{dD}{dR} \tag{4}$$

In fact equation (4) forms the basis of the Lagrange multiplier selection method since it indicates that $\lambda$ corresponds to the negative slope of the rate-distortion curve. Intuitively, the overall performance of such a method will highly dependent on the accuracy of the rate and distortion models.

There are several publications [2, 3, 5] that go in for the rate-distortion optimization. Assuming a high rate for the rate $R$, a typical high-rate (HR) approximation for model of $R$ and $D$ for entropy-constrained scalar quantization [4] is:

$$R_{HR}(D) \ = \ a \ log_2\left(\frac{b}{D}\right) \tag{5}$$

$$D_{HR} \ = \ \frac{Q^2}{3} \tag{6}$$

whereby *a* and *b* are constants and *Q* the quantizer value describing half the distance of the reproduction levels. Taking $R_{HR}$ and $D_{HR}$ into account the Lagrange multiplier $\lambda_{HR}$ can be determined as

$$\lambda_{HR} = -\frac{dD}{dR} = c \cdot Q^2 \qquad (7)$$

whereby *c* is a constant which is experimentally suggested to be 0.85 [3]. In summary, this method, referenced as High Rate HR-$\lambda$ selection, is practical and efficient.

Actually, it has been adopted into the reference software of the state-of-art video coding standard - H.264/AVC (AVC - Advanced Video Coding). On the other hand, this algorithm also has some drawbacks. First, HR-$\lambda$ is only related to *Q* and no property of the input signal is considered. This means that it can not adapt to different video sequences dynamically. More important, the "high rate" assumption is not realistic all the time, which will result in a poor performance for both rate and distortion models, especially for low bit-rate applications.

In a video coding algorithm the selection of coding modes, e.g. the mode selection of macroblocks, depends on the Lagrange cost function J. In order to get good mode estimation the determination of the Lagrange multiplier $\lambda$ gets a key problem. For example a known reference software for the video coding standard H.264/AVC calculates the Lagrange multiplier $\lambda$ by

$$\lambda = C \cdot 2^{\frac{qp-12}{6}} \qquad (8)$$

whereby *C* is a constant and *qp* is the quantization parameter. As no property of the input video signal is considered in this method, it can not adapt to the input signals at all.

In order to achieve adaptivity, in document [5] a Lagrange multiplier $\lambda$ estimation method is proposed based on the $\rho$-domain technique. Defining $\rho$ as a percentage of zeros among quantized residual coeeficients within a coded image block of an image of the video, the rate $R_\rho$ and distortion $D_\rho$ are used as follows by taking [6] into account:

$$R_\rho = \theta \cdot (1 - \rho) \qquad (9)$$

$$D_\rho = \sigma^2 \cdot e^{-\alpha(1-\rho)} \qquad (10)$$

whereby $\alpha$ and $\theta$ are coding constants, e is the exponential function and $\sigma^2$ is the variance of the transformed residuals. Taking equations (9) and (10) into account the Lagrange multiplier $\lambda_\rho$ can be calculated as:

$$\lambda_\rho = \beta \cdot \left( ln\left(\sigma^2 / D'\right) + \delta \right) \cdot D' / R' \qquad (11)$$

Whereby $\beta$ and $\delta$ are coding constants and R' is the rate used in the previously encoded frame and D' is the distortion of the previously encoded frame.

This method represents a first step towards adaptivity. Thanks to the introduction of the variance of transformed residual coefficients, it is able to adapt videos dynamically. However it decouples quantization information *Q* from the Lagrange multiplier $\lambda\rho$, which results in a bad rate-distortion performance such as in the case of rate control.

The rate model is a kind of approximation [7] which may greatly degrade the performance of the algorithm because of the error propagation by the Lagrange multiplier's direct derivation from rate *R* and distortion *D*.

In a patent application [8] a method for video coding a sequence of digitized images is known, wherein a prediction error is generated by the contents of each image by taking into account a rate distortion optimization criterion being dependent on a Lagrange multiplier, the prediction error resulting from predicting step is transformed into a plurality of transformed residual coefficients in each image, the transformed residual coefficients in each image are quantized, and the Lagrange multiplier is determined for each image based on a probability distribution of the transformed residual coefficients of the respective image, the probability distribution having its maximum probability at its mean zero and being formed such that the probabilities decrease to zero from the mean to large absolute values of the transformed residual coefficients, whereby the variance of the probability distribution is calculated from the plurality of transformed residual coefficients in the respective image.

Hence it is an object of this invention to provide a method and a device that achieves a better rate-distortion rate than known methods.

This object is accomplished by the independent claims. Advantageous developments can be achieved by the dependent claims.

The invention relates to a method for video coding a sequence of digitized image, comprising the steps of:

(a) predicting a prediction image for a content of the respective image taking into account a rate distortion optimization criterion being dependent on a Lagrange multiplier;
(b) generating a prediction error signal based on a difference of the respective image and the prediction image (P) of step (a);
(c) transforming the prediction error signal into transformed residual coefficients;
(d) quantizing the transformed residual coefficients by quantization interval into quantized coefficients;
(e) determining the Lagrange multiplier for the respective image based on a rate and a distortion, both the rate and distortion are based on

- a probability distribution of transformed residual coefficients of a previously coded image;
- a quantization interval and a rounding offset of the quantization interval of a respective image;

(f) selecting the probability distribution such that it is having its maximum probability at its mean zero and being formed such that the probabilities decrease to zero from the mean to large absolute values of the transformed residual coefficients;
(g) determining the rate based on an entropy for the quantized non-zero coefficients of the previously coded image, whereby the entropy is generated using the probability distribution, the quantization interval and the rounding offset.

This method shows the advantage that a variance of the transformed residual coefficients in the rate and distortion models are considered that results in adaptivity of the rate and distortion models according to images of the input video. The accuracy is achieved due to the fact that the rate does not consider entropy of the quantized zero coefficients. The good result using this method is achievable from low to high bit rate input videos. The rate and distortion can be generated by both encoder and decoder without a need for additional side information.

The method can be enhanced by determining a basic entropy for the quantized coefficients of the previously coded image and by forming the entropy by multiplying the basic entropy by a probability of quantized non-zero coefficients. This enhancement shows a low requirement on calculation complexity.

Further on the distortion can be determined

$$D = \int_{-(Q-F)}^{Q-F} x^2 f_L(x)dx + 2\sum_{n=1}^{\infty} \int_{nQ-F}^{(n+1)Q-F} (x - nQ)^2 f_L(x)dx$$

and the rate by

$$R = S \cdot \left(1 - P_0\right) \cdot H$$

with

$$H = -P_0 \cdot log_2 \, P_0 - 2 \sum_{n=1}^{\infty} P_n \cdot log_2 \, P_n$$

$$P_0 = \int_{-(Q-F)}^{Q-F} f_L(x) dx$$

$$P_n = \int_{nQ-F}^{(n+1)Q-F} f_L(x) dx$$

whereby $P_0$ represents a probability of quantized zero coefficients, $P_n$ a respective probability of a quantized non-zero coefficient and S a coding factor.

In particular the probability distribution can be defined by a Laplace distribution $f_L(x) = \dfrac{1}{2} \lambda_L e^{-\lambda_L |x|}$

with a standard derivation σ defined as $\sigma = \dfrac{\sqrt{2}}{\lambda_L}$. The variance thereof is defined as $\sigma^2$. This kind of probability distribution gives a good estimation of the transformed residual coefficients in video coding. The $\lambda_L$ is called probability distribution parameter.

By taking the Laplace distribution into account the distortion is determined as

$$D = \frac{e^{\lambda_L F}(2\lambda_L Q + \lambda_L^2 Q^2 - 2\lambda_L^2 QF) + 2 - 2e^{\lambda_L Q}}{\lambda_L^2(1 - e^{\lambda_L Q})}$$

and the rate as

$$R = \frac{S \cdot e^{-\lambda_L(Q-F)}}{ln\,2} \left\{ (1 - e^{-\lambda_L(Q-F)}) \, ln\,(1 - e^{-\lambda_L(Q-F)}) \right.$$
$$\left. + e^{-\lambda_L(Q-F)}(ln\,2 - ln\,(1 - e^{-\lambda_L Q}) - \lambda_L F + \frac{\lambda_L Q}{1 - e^{-\lambda_L Q}}) \right\}$$

Hence the rate and the distortion models can be written in a very compact way, whereby the rate and the distortion only relies on the quantization interval Q, the rounding offset F of the image to be encoded and the $\lambda_L$ probability distribution parameter. The coding factor S is only a constant factor that doesn't have to be recalculated for each image.

In one embodiment the coding factor S is determined such that a basic Lagrange multiplier, which is determined by a factor, most preferably assuming, times square of the quantization interval $\lambda_{HR} = c*Q^2$, and the Lagrange multiplier results in an identical value when the probability distribution parameter approaches zero. By this embodiment the coding factor S is adjusted in an easy way such that if the probability distribution reaches a uniform distribution the Lagrange multiplier for the method is identical to the basic Lagrange multiplier that represents the case of the known "high-rate" method (HR-λ).

Setting the probability of quantized zero coefficients to $P_0 \;=\; f_L(0) \;=\; \dfrac{1}{2}\,\lambda_L$ allows a simplification of the required calculation power to determine the Lagrange multiplier.

In another embodiment, if there is no previously coded image available, the Lagrange multiplier is determined by a factor, most preferably assuming 0.85, times square of the quantization interval $\lambda = c*Q^2$. This embodiment allows to initialize the coding of the sequence of the digitized images and to use the method for the images other than the first one.

In an embodiment of the method a ratio parameter is determined by a ratio of the rate of the previously coded image to a real rate after encoding of the previously coded image $\Phi=R/Rr$ and the Lagrange multiplier is generated by multiplying the Lagrange multiplier by the ratio parameter for coding the respective image. This very low complex embodiment generates the Lagrange multiplier with a higher precision. This leads to a higher image quality of the respective coded image at a given rate or at a given image quality a reduced rate compared with a method other than this embodiment.

This embodiment can be enhanced by representing the ratio parameter by a percentage of macroblocks in a skip mode of the previously coded image up to the power of a coding parameter $\phi = \gamma^{Ps}$, by determining the percentage by an average of the percentage of macroblocks in a skip mode of a number of previously coded images and the coding parameter is generated by an average of the coding parameter of the number of previously coded images, most preferably assuming a number of 10, and by, if the coding parameter is exceeding a threshold value, most preferably assuming a threshold value of 2.0, setting it to this threshold value. This enhancement leads to a stable determination of the Lagrange multiplier.

This enhancement and/or the recent embodiment can be further enhanced such that if the Lagrange multiplier exceeds an upper limit, most preferable 1.2 * Lagrange multiplier of the previously coded image, the Lagrange multiplier is set to this upper limit, or if the Lagrange multiplier falls below a lower limit, most preferable 0.8 * Lagrange multiplier of the previously coded image, the Lagrange multiplier is set to this lower limit. By this enhancement big variations of the Lagrange multiplier that may lead to ill solutions will be suppressed.

In an alternative embodiment to the recent embodiment a basic Lagrange multiplier is determined by a factor, most preferably assuming 0.85, times square of the quantization interval $\lambda_{HR} = c*Q^2$, if the Lagrange multiplier exceeds an upper limit, most preferable five times the basic Lagrange multiplier, the Lagrange multiplier is set to this upper limit, or if the Lagrange multiplier falls below a lower limit, most preferable 0.2 times the basic Lagrange multiplier, the Lagrange multiplier is set to this lower limit. By this enhancement big variations of the Lagrange multiplier that may lead to ill solutions will be suppressed.

The method can be implemented in a video coding standard, e.g. H.264/AVC standard. By doing this the gains of this invention can also be used in standard video coders, e.g. H.264.

Besides the method a device for video coding a sequence of digitized image is also part of this invention, whereby this device covers at least one means that is capable of performing the respective method steps as described above. With this device the method can be implemented and executed.

The invention and its advantageous developments are described by taking the following figures into account:

Figure 1     a schematic of a video encoder system;

Figure 2     simulation results of a first method for several test sequences;

Figure 3     simulation results of picture quality vs. rate of the first method and a high rate method;

Figure 4     comparison of a percentage of macroblocks in skip mode for a single image versus a ratio of a estimated rate to a real rate after encoding;

Figure 5     simulation results of a second method for several test sequences;

Figure 6     simulation results of picture quality vs. rate of the second method and a high rate method;

Elements with identical function and mode of action are marked with identical reference signs.

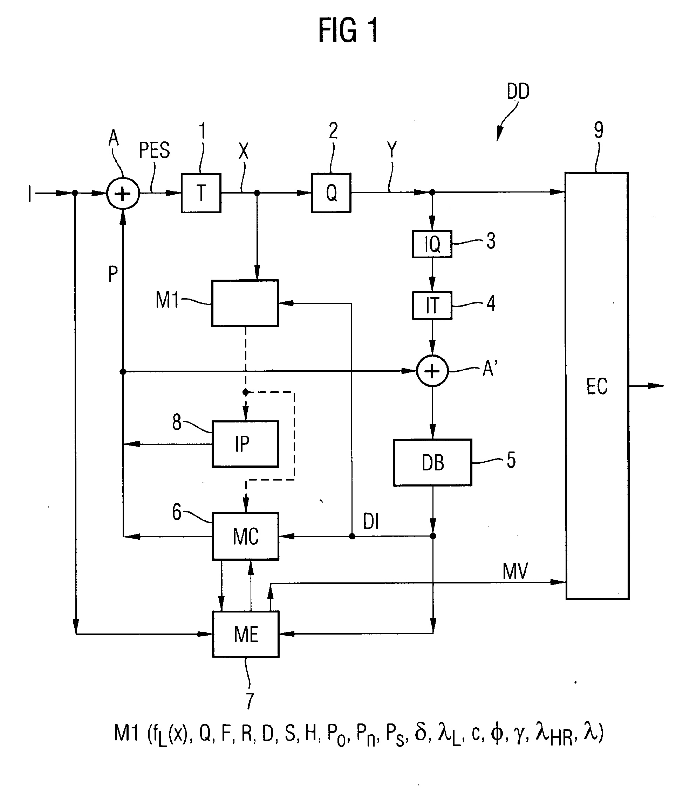

Fig. 1 shows an example of a video encoder based on the video coding standard H.264/AVC in a simplified form. In the encoder of Fig. 1, a sequence of digitized images I is compressed by encoding the so-called prediction error signal resulting from the prediction performed in a predicting step.

The prediction error signal PES is generated by supplying the input image I to an addition means A subtracting from the input image I a predicted image P determined in a corresponding prediction step. The prediction error signal PES is supplied to transformation means 1 performing a well-known transformation T on the digitized image resulting in transformed residual coefficients x. After a scaling step (not shown), the transformed residual coefficients x of each image I are subjected to a quantization Q performed in a corresponding quantizer 2. The resulting transformed and quantized coefficients y are supplied to an entropy encoder 9 performing entropy coding EC. Furthermore, those quantized coefficients y are scaled and supplied to an inverse quantizer 3 performing an inverse quantization IQ on the coefficients. After this inverse quantization, the coefficients are subjected to an inverse transformation IT by inverse transformation means 4. The resulting decoded error signal is added to the predicted image P in an addition means A'. The image resulting therefrom is subjected to a deblocking step DB in a corresponding deblocker 5. As a result, a decoded image DI is obtained, which is supplied to a motion compensator 6 performing a motion compensation. The motion compensation is performed by the use of so-called motion vectors MV that are calculated in a motion estimation step ME in a motion estimator 7. The motion vectors describe the motion of picture blocks from one image to another. After performing the motion compensation MC, the predicted image P is obtained, which is supplied to the adder A in order to determine the prediction error.

The prediction based on motion compensation MC and motion estimation ME is a temporal prediction that is used in a so called INTER-frame coding. When rate distortion optimization according to the invention is used for this temporal prediction, different prediction methods for a respective image are applied. The prediction methods e.g. differ in the feature which images and how many images are used for determining the predicted image P. For each encoded image obtained by said different predicting methods, the cost function $J$ according to equation (2) on the basis of the Lagrange multiplier is calculated, the Lagrange multiplier being determined by the method of the invention. The prediction method resulting in the lowest cost $J$ for the respective image is used as the prediction method for this image.

Instead of the temporal (= INTER) prediction described before, the encoder in Fig. 1 may use a spatial (= INTRA) prediction IP being performed by intra prediction means 8. In this INTRA prediction, the so-called macroblocks in each image are predicted from neighboring previously encoded macroblocks of the current image. To exploit spatial correlation among pixels in the image to be encoded, the coding standard H.264 uses three basic types of prediction, namely full-macroblock prediction for 16x16 luma (luma = luminance) or the corresponding chroma (chroma = chrominance) block size, 8x8 luma prediction or 4x4 luma prediction. For the full-macroblock prediction, the pixel values of an entire macroblock of luma or chroma data are predicted from the edge pixels of neighboring previously decoded macroblocks. Full-macroblock predictions can be preformed in one of four different ways that can be selected by the encoder for the prediction of each particular macroblock. Those different ways refer to vertical, horizontal, DC and planar prediction. For the vertical and horizontal prediction types, the pixel values of a macroblock are predicted from the pixels just above or to the left of the macroblock, respectively. In DC prediction, the luma values of the neighboring pixels are averaged and the resulting average value is used as a predictor. In planar prediction, a three-parameter curve-fitting equation is used to form a prediction block having a brightness slope in the horizontal direction and a brightness slope in the vertical direction that approximately matches the neighboring pixels.

In the above mentioned 4x4 luma prediction, the values of each 4x4 block of luma samples are predicted from the neighboring pixels above or left of a 4x4 block, and 9 different directional ways of performing the prediction can be selected by the encoder. The above mentioned 8x8 luma prediction basically uses the same concepts as the 4x4 prediction, but with a prediction block size that is 8x8 rather than 4x4 and with low-pass filtering of the predictor to improve prediction performance.

When rate distortion optimization is applied to INTRA or INTER prediction, different INTRA or INTER prediction modes are applied to the blocks, e.g. macroblocks, in each image, and the prediction mode leading to the lowest cost according to equation (2) is used for the respective blocks in the image, wherein the Lagrange multiplier λ is selected based on the method according to the invention.

In the following, a first embodiment of the invention will be described, where the Lagrange multiplier for rate distortion optimization is determined based on a Laplace distribution. The method of the first embodiment is also called first method and will result in a Lagrange multiplier Lap1-λ. Furthermore, results based on this embodiment will be presented when applying the first method in the reference software of H.264/AVC for intra prediction.

The Laplacian distribution applied for the INTRA predicted images has zero mean and is defined as follows:

$$f_L(x) \ = \ \frac{1}{2} \, \lambda_L e^{-\lambda_L |x|} \tag{12}$$

$$\lambda_L \;=\; \frac{\sqrt{2}}{\sigma} \tag{13}$$

In equation (12), x represents the transformed residual coefficients after applying the transformation step T in Fig.1 $\lambda_L$ is the distribution factor and $\sigma^2$ is the variance of the transformed residual coefficients in an image I, whereby the variance indicates the property of the input video. Because of the one-to-one mapping between $\sigma$ and $\lambda_L$, the latter will be used instead in the following expressions for simplicity.

In the H.264/AVC standard, a uniform reconstruction quantizer is used. Therefore, a basic entropy H of the quantized coefficients y in Fig.1 can be written as follows:

$$H \;=\; -P_0 \cdot log_2 \, P_0 \;-\; 2 \sum_{n=1}^{\infty} P_n \cdot log_2 \, P_n \tag{14}$$

$$P_0 = \int_{-(Q-F)}^{Q-F} f_L\big(x\big) dx \tag{15}$$

$$P_n \;=\; \int_{nQ-F}^{(n+1)Q-F} f_L\big(x\big) dx \tag{16}$$

$Q$ indicates the quantization interval and $F$ is the rounding offset used for quantization. $P_0$ represents a probability of quantized zero coefficients and $P_n$ of quantized non-zero coefficients.

The distortion $D$ can be written as:

$$D \;=\; \int_{-(Q-F)}^{Q-F} x^2 f_L\big(x\big) dx \;+\; 2 \sum_{n=1}^{\infty} \int_{nQ-F}^{(n+1)Q-F} \big(x - nQ\big)^2 f_L\big(x\big) dx \tag{17}$$

In theory, the basic entropy expression equation (14) can be used to represent the rate directly. Nevertheless, the accuracy can be furthered improved. Assuming that pixels are coded independently, equation (14) actually describes the average entropy for each pixel. However, in video coding standards, such as H.264/AVC, a kind of run-length coding technique is applied to the quantized block level, which means successive zeros in zigzag order will be coded together to save bits. Consequently, if the successive zero coefficients after quantization take a big percentage, such as in low bit-rate inter-frame coding, equation (14) will be trapped into a low performance. The inventors discovered that normally the average entropy for zeros is much smaller than that for non-zeros. Therefore the rate $R$ is formed on the basis of entropy, whereby the entropy is based on the basic entropy H taking only non-zero quantized coefficients into account, e.g.

$$R \;=\; S \cdot \big(1 - P_0\big) \cdot H \tag{18}$$

Since the Laplacian distribution assumed for the residual coefficients is usually not an ideal Laplacian distribution, the rate $R$ is compensated by a coding factor $S$.

Putting equations (13) to (16) into equation (18) the rate $R$ can be written as:

$$R = \frac{S \cdot e^{-\lambda_L(Q-F)}}{\ln 2} \left\{ (1 - e^{-\lambda_L(Q-F)}) \ln(1 - e^{-\lambda_L(Q-F)}) + e^{-\lambda_L(Q-F)}(\ln 2 - \ln(1 - e^{-\lambda_L Q})) - \lambda_L F + \frac{\lambda_L Q}{1 - e^{-\lambda_L Q}}) \right\} \qquad (19)$$

Similarly the distortion D can be written by taking equations (13) to (17) into account as:

$$D = \frac{e^{\lambda_L F}(2\lambda_L Q + \lambda_L^2 Q^2 - 2\lambda_L^2 QF) + 2 - 2e^{\lambda_L Q}}{\lambda_L^2(1 - e^{\lambda_L Q})} \qquad (20)$$

Since $\lambda_L$ is an inherent property of input videos, it is reasonable to be regarded as a constant during a short time, such as several images I. Thus equation (4) turns to

$$\lambda = \frac{dD}{dR} = \frac{\partial D / \partial Q}{\partial R / \partial Q} \qquad (21)$$

By putting equations (19) and (20) into equation (21), the Laplacian distribution based on the Lagrange multiplier $\lambda$ can be determined. The complete expression according to equation (21) is too long and will not be presented here. Practically, it can be easily computed by mathematical software or numerical methods. In one embodiment, a lookup table is used to determining $\lambda$ in order to save computation time.

Defining $p_0$, such as

$$p_0 = f_L(0) = \frac{1}{2}\lambda_L \ , \qquad (22)$$

the equations (19) and (20) become less complex. For example in the video coding standard H.264/AVC for INTER prediction and using as rounding offset F = Q/6, equation (21) becomes:

$$\lambda = \frac{\ln 2}{S}\left(\frac{7}{18}Q^2 - \frac{8 + 35(\ln 5 - \ln 3 - \ln Q - \ln p_0)}{54}Q^3 p_0\right) + O(p_0^2) \quad (23)$$

whereby O represents the big O notation and $p_0$ is between 0 and 1 inclusively. Consequently, the high order items of $p_0$ in (23), are mathematically neglectable. However, in practice, this can not be ignored when Q is big because Q always has a higher order than $p_0$ in such items.

On the other hand, when $\lambda_L$, or $p_0$, approaches zero (or σ approaches infinity), the Laplacian distribution will degrade to the uniform distribution. In the above example, the limitation of equation (23) will be

$$\lim_{\lambda_L \to 0} \lambda = \lim_{p_0 \to 0} \lambda = \frac{7 \ln 2}{18S} \cdot Q^2, \tag{24}$$

which mathematically matches equation (7). Therefore, the HR-$\lambda$ can be interpreted as a special case of the proposed first method Lap1-$\lambda$.

The proposed Lagrange multiplier selection first method Lap1-$\lambda$ is a general method for the rate-distortion in hybrid video coding. In the following an example for implementation is given for an H.264/AVC environment. Hereby there are several practical issues related to the implementation with mentioning. Most of them are on the derivations of parameters for the Lap1-$\lambda$ calculation.

First, $Q$ in the equations (19) and (20) is determined by quantization parameter qp in H.264/AVC,

$$Q = 2^{\frac{qp-12}{6}} \tag{25}$$

And to be in line with the H.264/AVC reference software, the rounding offset F in the equations (19) and (20) is set to Q/3 and Q/6 for INTRA-image and INTER-image coding, respectively.

Second, the coding factor $S$ in equation (19) can be calculated by comparing the degraded Lap1-$\lambda$ to HR-$\lambda$, i.e. the comparison between equations (22) and (7). Keeping c as 0.85 as in the H.264/AVC reference software, $S$ for INTER-image coding in H.264/AVC will be

$$S = \frac{7 \ln 2}{18c} = 0.317 \tag{26}$$

Similarly, the $S$ for INTRA-image coding can be derived as S=0.181. Of course, $S$ can also be determined by experiments.

Third, $\lambda_L$ in equations (19) and (20) is calculated according to its definitions for each image. As it is supposed to be constant over a short time, the $\lambda_L$ of the previous image is used as the estimation to the current image. This means that for coding of the current image the probability distribution fL(x) of the previously coded image is used.

Finally, the $\lambda$ for the Lap1-$\lambda$ method can be calculated according to equations (19) to (21). In practice, to avoid being trapped into ill solutions, the range of the final $\lambda$ should be limited. In the current example implementation, it is set to between 20% and 500% of the corresponding value of HR-$\lambda$. It should be also noted that, for the very first image to be coded by an INTRA coding mode and the first image to be coded by an INTER coding mode, as no $\lambda_L$ information available, the HR-$\lambda$ is used instead of the Lap1-$\lambda$.

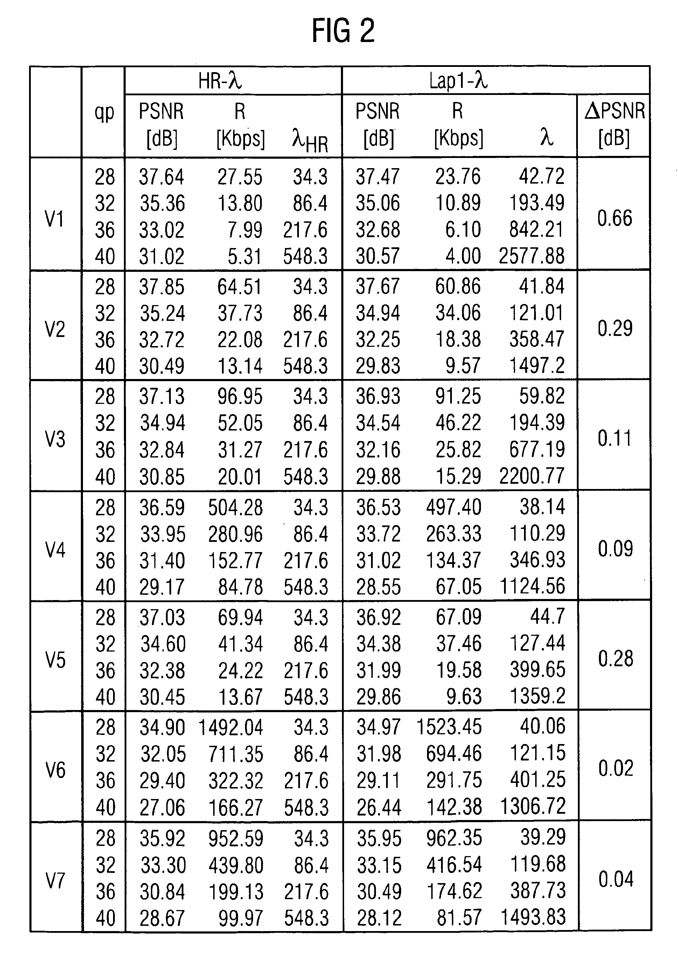

The simulations for this example were made on JM 11.0, the most recent reference software of H.264/AVC. Since the first image I is always coded with HR-$\lambda$, only INTER-coded images (P-frames) are used for the result. Figure 2 shows the results of the simulation. The first column covers different test sequences V1, ..., V7 that are:

| Test Sequence | Resolution | Name |
|---|---|---|
| V1 | QCIF | container |
| V2 | QCIF | news |
| V3 | QCIF | foreman |
| V4 | CIF | paris |
| V5 | QCIF | silent |
| V6 | CIF | mobile |
| V7 | CIF | tempte |

The resolution CIF (CIF - Common Intermediate Format) represents 352x288 pixels and QCIF (QCIF - Quarter CIF) 176x144 pixels. The respective test sequences are well known at JVT (JVT-Joint Video Team of ISO/IEC MPEG and ITU-T VCEG) and are therefore not described in more detail. The second column covers the used quantization parameter qp. The third column HR-$\lambda$ contains the results using the High Rate method for determining the Lagrange multiplier. In particular the first sub-column of the third column shows the average PSNR (PSNR - Peak Signal To Noise Ratio), the second sub-column the Rate in Kbps (Kbps - kilo Bits per Second) and the third sub-column an averaged Laplace multiplier for HR-$\lambda$. The fourth column covers the test results using the Lap1-$\lambda$ method. In the last column an averaged difference between the PSNR values of the Lap1-$\lambda$ and HR-$\lambda$ is shown for each test sequence.

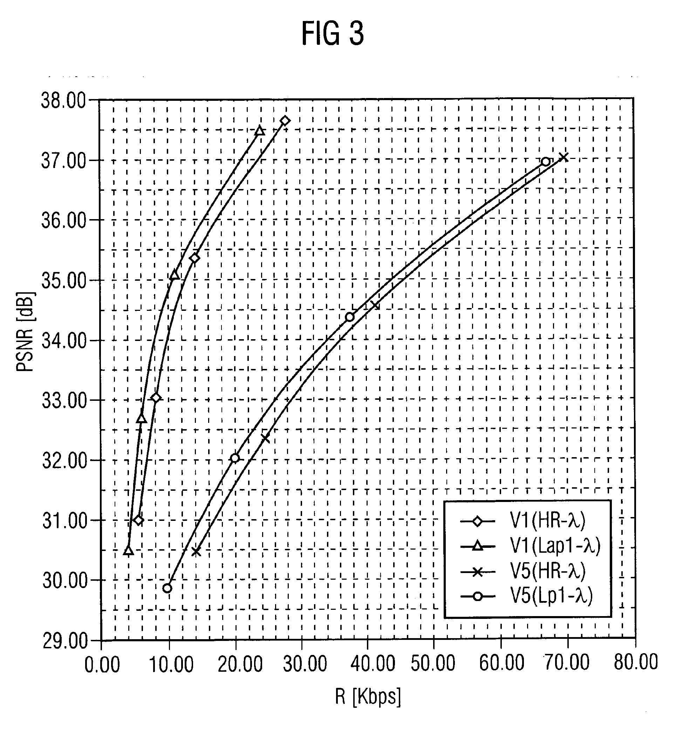

Fig. 3 shows a comparison of of the PSNR of the test sequences V1 and V5 using both methods Lap1-$\lambda$ and HR-$\lambda$ versus the rate R.

Since the rate-distortion optimization affects not only the compression on luma signal, but also that on chroma signal, the PSNR in the table is calculated according to

$$ P = \frac{1}{6}(4P_L + P_{C0} + P_{C1}) \qquad (27) $$

where $P_L$, $P_{CO}$ and $P_{CI}$ are PSNR-values for luma, chroma0 and chroma1 in a 4:2:0 video, respectively. The $\Delta$PSNR indicates the average PSNR differences between RD-curves. Thus it can be used to as an objective evaluation on the whole performance.

Thanks to the more accurate models for the rate R and distortion D, the proposed first method Lap1-$\lambda$ shows a superior performance over HR-$\lambda$. The average gain in $\Delta$PSNR for the seven test sequences is about 0.21 dB. The maximum gain in $\Delta$PSNR is 0.66 dB for the test sequence V1. As mentioned above, such gain obtained by a calculator for each sequence is a kind of average. The peak gain is actually even bigger. For example, Fig. 3 shows that the peak gain for the test sequence V1 and the test sequence V5 is up to 1.1 dB and 0.5 dB, respectively.

However, for videos with big movements or rotations, such as V6 and V7, the gain by the LapE-1 - method is very little. It can be explained by the used rate function R. Normally the variance for the fast videos (test sequences) is much bigger than that for slow ones. That is the distribution in such case is close to the assumption of uniform distribution, which results that the HR-$\lambda$ method can also work fine. Therefore in such situations the methods HR-$\lambda$ and Lap-X share similar results. Contrariwise, for slow videos, the method of HR-$\lambda$ fails and the first method of Lap1-$\lambda$ gives a better performance.

An enhancement to the presented first method can be achieved by a second method, called Lap2-$\lambda$. In hybrid video coding standards, such as H.264/AVC, a skip mode is a special INTER-coding method to encode one macroblock of the image I. The basic idea is to take the prediction as the reconstruction directly and code nothing but the skip mode flag. As in such a case only one bit will be coded for a single macroblock, skip mode is quite efficient for videos where high correlations exist among successive images, such as sequences with still background. If $P_S$ is defined as a percentage of macroblocks in skip mode for a single image, it can be regarded as a measure for the correlations among successive images to some extent. The inventors discovered that the rate R is highly related to $P_S$ in a coded sequence.

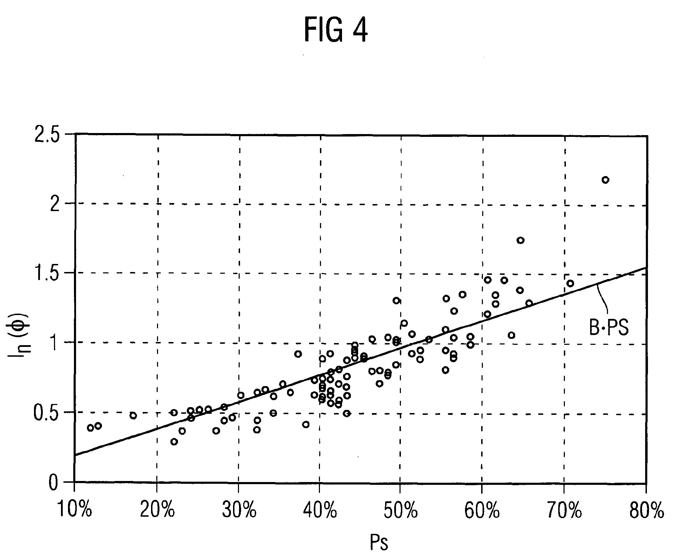

Defining $\Phi$ as the ratio of the estimated rate R by equation (19), indicated as $R(Lap1\text{-}\lambda)$, to the real rate $Rr$ collected after encoding, a relationship between $\Phi$ and $P_S$ on frame level can be investigated as seen in Fig. 4. The test sequence V3 with the parameters Main Profile of H.264 (JM12.1), five reference frames, QP=28 and 99 INTRA (P) frames were used.

From this figure, an approximately linear relationship between ln($\Phi$) and $P_S$ can be observed, i.e.

$$ ln(\phi) \approx B \cdot P_S \implies \phi \approx e^{B \cdot P_S} = \gamma^{P_S} \qquad (28) $$

where $B$ and $\gamma$ are coding parameters reflecting INTER-frame correlations of video sequences. Considering the definition of $\Phi$, the real rate $Rr$ can be approximately established as

$$ R_r = \frac{R(Lap1 - \lambda)}{\phi} \approx \frac{R(Lap1 - \lambda)}{\gamma^{P_S}} \qquad (29) $$

In fact, $\gamma^{Ps}$ can be regarded as a correction to the estimated rate $R(Lap1\text{-}\lambda)$ after encoding. With such feedback, the rate R is dynamically refined at frame level so that a higher accuracy is achieved.

In the case of no shot transition, the inherent properties of test sequences, such as $P_S$ and $\gamma$, can be reasonably

regarded as constants during several images. While keeping the distortion D as defined in equation (20) and replacing the rate R as defined in equation (19) with the improvement as defined in equation (29) the improved Langrage multiplier can be written as

$$\lambda_I = \frac{\partial D / \partial Q}{\partial R / \partial Q} \cdot \gamma^{P_S} = \lambda \cdot \gamma^{P_S} \qquad (30)$$

That is, the proposed second method Lap2-$\lambda$ is actually an extension to Lap1-$\lambda$ by a dynamic rate factor $\gamma^{P_S}$ which reflects the correlations among successive frames in video sequences. It should be noted that if no skip mode is considered, i.e. $P_S$ equals zero, $\lambda_I$ will reduce to $\lambda$ of Lap1-$\lambda$-method.

Moreover, it is well known that uniform distribution is a special case of Laplace distribution when the Laplace parameter $\lambda_L$ approaches zero. In such a case, the limit of $\lambda_I$ is

$$\lim_{\lambda_L \to 0} \lambda_I = \gamma^{P_S} \cdot c^* \cdot Q^2, \qquad (31)$$

where c* is a coding constant. For a single frame where $\gamma$ and $P_S$ are both constant, equation (31) matches equation (31) mathematically.

The proposed Lagrange multiplier selection second method $\lambda_I$ can be used in rate distortion optimizations of any hybrid video coding standard. For example, it was embedded into the H.264/AVC environment. To determine $\lambda_I$ for a frame before encoding, parameters needed in (30), such as $\gamma$ and $P_S$, have to be estimated. Such estimations are based on the real values collected after the encoding of previously encoded images.

First, the real values for $\gamma$ and $P_S$ are updated at frame level. After the encoding of each image, $P_S$ is obtained according to the statistic of the number of macroblocks in skip mode. Then the ratio $\Phi$ is calculated with the estimated rate $R(Lap1-\lambda)$, and the real rate Rr for the coded image. After that the parameter $\gamma$ is determined by equation (28). The stability of $\gamma$ is quite important since bigger $\gamma$ may lead to bigger $\lambda_I$ for the next frame and then even bigger $\gamma$. To inhibit such undesired positive feedback, the range of $\gamma$ should be limited. Currently, it is set to a value of 2.0 at maximum. Of course, a fixed value for $\gamma$ may be used as well, through some adaptivity will be sacrificed.

Second, estimations on $\gamma$ and $P_S$ for $\lambda_I$ calculation for the current image are made based on the averages of $\gamma$ and $P_S$ in previous ten images respectively. In fact, such setting can suppress the negative effect by sharp variations of $\gamma$ and $P_S$ in previous image while keep adaptivity.

Finally, to prevent being trapped into ill solutions the range of $\lambda_I$ should be limited as well. In this example implementation, it is set between 90% and 500% of the corresponding value if $\lambda_{HR}$. Moreover, to avoid big variations in the PSNR, the $\lambda_I$ of the current image is limited between 80% and 120% of that of the previous image.

The enhancement is verified by a reference software of H.264/AVC, called JM 12.1. The first 100 frames (one I (=INTRA) frame followed by 99 P (=INTER) frames) of each test sequence were coded with the following parameters using the H.264/AVC Main Profile:

- five reference frames,
- CABAC entropy coding,
- fixed quantization parameters,
- high complexity rate-distortion optimization,
- deblocking filter enabled.

It should be noted that the 8x8 transform was disabled in the simulation since the rate and distortion models aforementioned are both based on 4x4 transform.

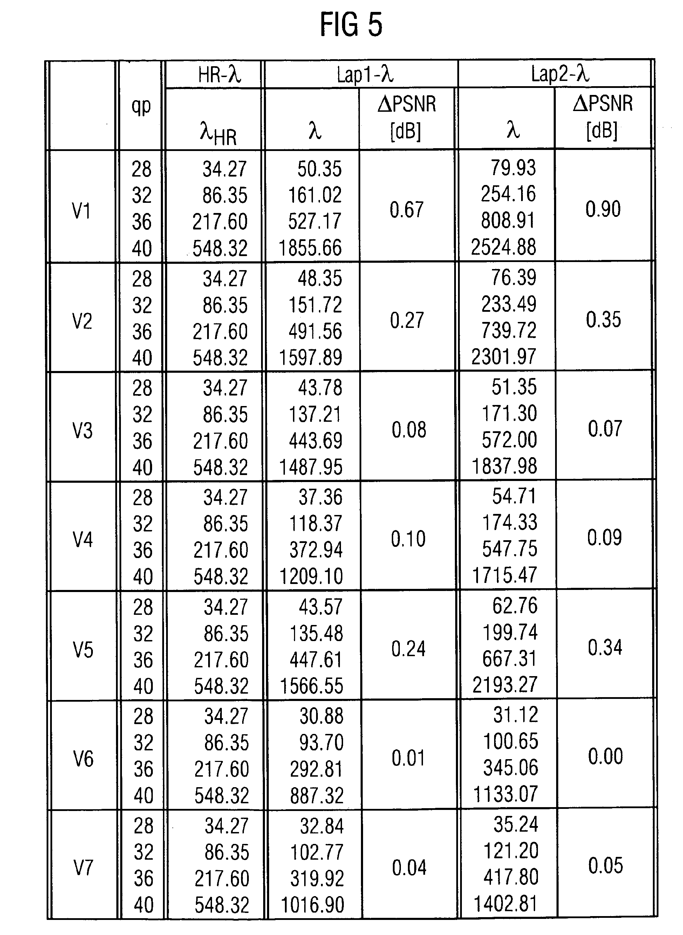

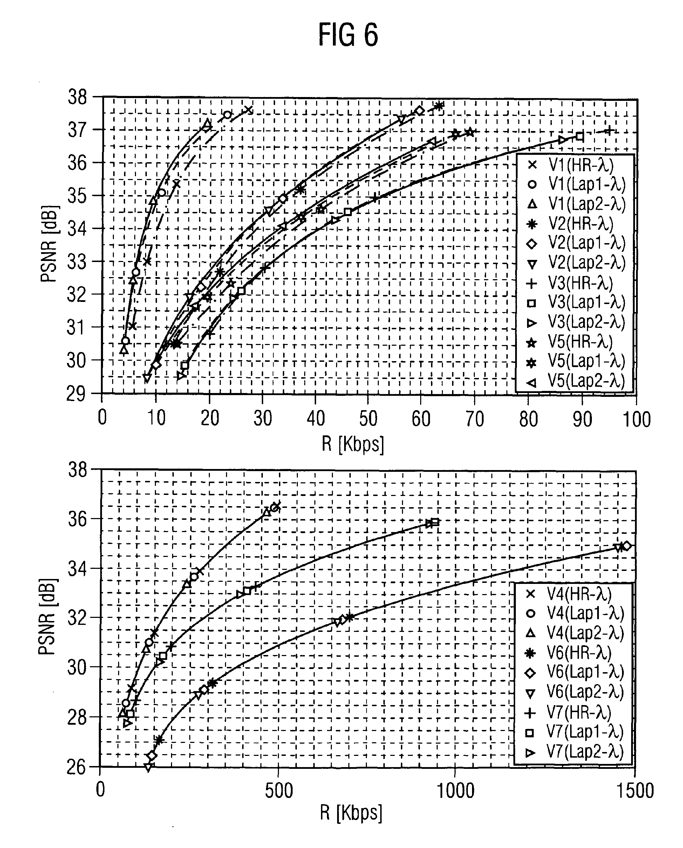

Fig. 5 and Fig. 6 show the simulation results for P frames. I frames are not counted, because they were coded in the same way for all tests. Fig. 6 shows weighted averages of luminance and chrominance as PSNR.

Fig. 5 shows in column 1 the test sequences V1, ..., V7 and the qp-value in the second column. In the third, fourth and fifth columns, the results of the three discussed methods HR-$\lambda$, Lap1-$\lambda$ and Lap2-$\lambda$ can be seen. The third column shows the Lagrange multiplier of the HR-$\lambda$ method. The fourth column covers a first sub-column representing the Lagrange multiplier of the Lap1-$\lambda$ method and a $\Delta$PSNR of the HR-$\lambda$ and Lap1-$\lambda$ methods. Similar, the third column represents the Lagrange multiplier of the Lap2-λ method and a ΔPSNR of the HR-λ and Lap2-λ methods.

The respective ΔPSNR indicates the average PSNR difference between two RD-curves (RD - rate distortion). Therefore it is used as an objective evaluation on the whole performance. Thanks to the more accurate models, the proposed Lap2-λ shows a superior performance over both HR-λ and Lap1-λ methods. Compared with HR-λ, Lap2-λ obtains a ΔPSNR gain of 0.26 dB on average. Moreover, the peak ΔPSNR gain for single sequence can be much bigger: up to 1.3 dB, 0.6 dB and 0.5 dB gains can be observed from the figures for the test sequences V1, V2 and V5 respectively. Compared with Lap1-λ, Lap2-λ achieves an improvement as well. For the last two test sequences mentioned above, the peak ΔPSNR gains are both above 0.15 dB. And for the test sequence V1 the peak gain is even more than 0.3 dB.

However, for videos with big movements, rotations or zooming, such as the test sequences V6 and V7, the gains by Lap2-λ are quite limited. The reason is the same as that for Lap1-λ. That is, for fast sequences, the transformed residuals are much bigger than those for slow sequences due to the less precise prediction, which basically confirms the "high rate" assumption. Thus HR-λ, Lap1-λ and Lap2-λ show a similar performance. On the contrary, for slow sequences, the "high rate" assumption of HR-λ fails and the estimation of the rate R and distortion D by Lap2-λ method are much more accurate so that Lap2-λ method provides a better result.

As for the complexity of computation, Lap2-λ method is higher than HR-λ method while similar with Lap1-λ method. In fact, the computation mainly arises from the complex rate R and distortion D. As such computation only occurs once at frame level, it is neglectable compared with other modules of the encoder, such as motion estimation.

It should be noted that the teachings of all embodiments can be combined. The terms image and frame in all embodiments have the same meaning.

A device DD for video coding a sequence of digitized image I covers at least one means M1 that is capable of performing the respective method steps. A device DD with the means M1 and other means can be seen in Fig. 1. The means of the device DD can be implemented in hardware, software or in a combination of hard- and software. The device can be implemented in a video server that provides encoded videos e.g. for a video delivery service. The means M1 generates the Lagrange multiplier according to the first and/or second method. The Langrage multiplier can be used e.g. by the INTRA-prediction means 8.

Bibliography

[1] A. Ortega and K. Ramchandran, "Rate-distortion methods for image and video compression", IEEE Signal Processing Magazine, vol. 15, no. 6, pp. 23-50, 1998

[2] G.J. Sullivan and T. Wiegand, "Rate-distortion optimization for video compression," IEEE Signal Processing Magazine, vol. 15, no. 6, pp. 74-90, 1998.

[3] T. Wiegand and B. Girod, "Lagrange multiplier selection in hybrid video coder control," in IEEE Int. Conf. on Image Processing, 2001, vol. 3, pp. 542-545

[4] H. Gish and J. Pierce, "Asymptotically efficient quantizing," IEEE Trans. Inf. Theory, vol. 14, no. 5, pp. 676-683, 1968

[5] L. Chen and I. Garbacea, "Adaptive lambda estimation in lagrangian rate-distortion optimization for video coding," in Visual Comm. and Image Processing, Jan 17-19 2006

[6] Z.H. He and S.K. Mitra, "Optimum bit allocation and accurate rate control for video coding via ρ-domain source modeling", IEEE Trans. Circuits System Video Technology, vol. 12, no. 10, pp. 840-849, 2002

[7] -, "A linear source model and a unified rate control algorithm for DCT video coding", IEEE Trans. Circuits Syst. Video Technol., vol. 12, no. 11, pp. 970-982, 2002

[8] EP 06020948.3

## Claims

1. A method for video coding a sequence of digitized image (I), comprising the steps of:

   (a) predicting a prediction image (P) for a content of the respective image (I) taking into account a rate distortion optimization criterion being dependent on a Lagrange multiplier (λ);
   (b) generating a prediction error signal (PES) based on a difference of the respective image (I) and the prediction image (P) of step (a);

(c) transforming the prediction error signal (PES) into transformed residual coefficients (x);

(d) quantizing the transformed residual coefficients (x) by quantization interval (Q) into quantized coefficients (y);

(e) determining the Lagrange multiplier ($\lambda$) for the respective image (I) based on a rate (R) and a distortion (D), both the rate (R) and distortion (D) are based on

- a probability distribution (fL(x)) of transformed residual coefficients (x) of a previously coded image;
- a quantization interval (Q) and a rounding offset (F) of the quantization interval (Q) of a respective image;

(f) selecting the probability distribution (fL(x)) such that it is having its maximum probability at its mean zero and being formed such that the probabilities decrease to zero from the mean to large absolute values of the transformed residual coefficients (x);

(g) determining the rate (R) based on an entropy for the quantized non-zero coefficients (y) of the previously coded image (I), whereby the entropy is generated using the probability distribution (fL(x)), the quantization interval (Q) and the rounding offset (F).

2. The method according to claim 1,
wherein determining a basic entropy (H) for the quantized coefficients (y) of the previously coded image (I), the entropy is formed by multiplying the basic entropy (H) by a probability of quantized non-zero coefficients (y).

3. The method according to one of the previous claims,
wherein the distortion (D) is determined by

$$D \;=\; \int_{-(Q-F)}^{Q-F} x^2 f_L(x)dx \;+\; 2\sum_{n=1}^{\infty} \int_{nQ-F}^{(n+1)Q-F} (x - nQ)^2 f_L(x)dx$$

and the rate (R) by

$$R \;=\; S \cdot \left(1 - P_0\right) \cdot H$$

with

$$H \;=\; -P_0 \cdot log_2 P_0 \;-\; 2\sum_{n=1}^{\infty} P_n \cdot log_2 P_n$$

$$P_0 = \int_{-(Q-F)}^{Q-F} f_L(x)dx$$

$$P_n \;=\; \int_{nQ-F}^{(n+1)Q-F} f_L(x)dx$$

whereby $P_0$ represents a probability of quantized zero coefficients (y), $P_n$ a respective probability of a quantized non-zero coefficient (y) and S a coding factor.

4. The method according to claim 3,

wherein the probability distribution (fL(x)) is defined by a Laplace distribution $f_L(x) = \dfrac{1}{2}\lambda_L e^{-\lambda_L|x|}$ with a

variance ($\sigma^2$) defined as $\lambda_L = \dfrac{\sqrt{2}}{\sigma}$ .

5. The method according to claim 4,
   wherein the distortion (D) is determined as

$$D = \frac{e^{\lambda_L F}(2\lambda_L Q + \lambda_L^2 Q^2 - 2\lambda_L^2 QF) + 2 - 2e^{\lambda_L Q}}{\lambda_L^2(1 - e^{\lambda_L Q})}$$

and the rate ® as

$$R = \frac{S \cdot e^{-\lambda_L(Q-F)}}{\ln 2}\left\{-(1 - e^{-\lambda_L(Q-F)})\ln(1 - e^{-\lambda_L(Q-F)})\right.$$
$$\left. + e^{-\lambda_L(Q-F)}(\ln 2 - \ln(1 - e^{-\lambda_L Q})) - \lambda_L F + \frac{\lambda_L Q}{1 - e^{-\lambda_L Q}})\right\}$$

6. The method according to one of the claims 3 to 5,
   wherein the coding factor S is determined by such that a basic Lagrange multiplier ($\lambda_{HR}$), which is determined by a factor c, most preferably assuming c=0.85, times square of the quantization interval (Q) $\lambda_{HR} = c*Q^2$, and the Lagrange multiplier ($\lambda$) result in an identical value when the probability distribution parameter ($\lambda_L$) approaches zero.

7. The method according to one of the previous claims,
   wherein, if there is no previously coded image available, the Lagrange multiplier ($\lambda$) is determined by a factor (c), most preferably assuming c=0.85, times square of the quantization interval (Q), $\lambda = c*Q^2$.

8. The method according to one of the previous claims,
   wherein a ratio parameter ($\Phi$) is determined by a ratio of the rate (R) of the previously coded image to a real rate (Rr) after encoding of the previously coded image $\Phi=R/Rr$, determining the Lagrange multiplier ($\lambda$) by multiplying the Lagrange multiplier ($\lambda$) by the ratio parameter ($\Phi$) for coding the respective image (I).

9. The method according to the previous claim,
   wherein the ratio parameter ($\Phi$) is represented by a percentage ($P_S$) of macroblocks in a skip mode of the previously coded image up to the power of a coding parameter ($\gamma$) $\phi = \gamma^{P_S}$,
   the percentage ($P_S$) is determined by an average of the percentage ($P_S$) of macroblocks in a skip mode of a number of previously coded images and the coding parameter ($\gamma$) is generated by an average of the coding parameter ($\gamma$) of the number of previously coded images, most preferably assuming a number of 10,
   if the coding parameter ($\gamma$) is exceeding a threshold value, most preferably assuming a threshold value of 2.0, it is set to this threshold value.

10. The method according to claim 8 or 9,
    wherein if the Lagrange multiplier ($\lambda$) exceeds an upper limit, most preferable 1.2 * Lagrange multiplier ($\lambda$) of the previously coded image, the Lagrange multiplier ($\lambda$) is set to this upper limit, or if the Lagrange multiplier ($\lambda$) falls below a lower limit, most preferable 0.8 * Lagrange multiplier ($\lambda$) of the previously coded image, the Lagrange multiplier ($\lambda$) is set to this lower limit.

11. The method according to one of the claims 1 to 7,
wherein a basic Lagrange multiplier ($\lambda_{HR}$) is determined by a factor c, most preferably assuming c=0.85, times square of the quantization interval (Q) $\lambda_{HR} = c*Q^2$,
if the Lagrange multiplier ($\lambda$) exceeds an upper limit, most preferable five times the basic Lagrange multiplier ($\lambda_{HR}$), the Lagrange multiplier ($\lambda$) is set to this upper limit, or if the Lagrange multiplier ($\lambda$) falls below a lower limit, most preferable 0.2 times the basic Lagrange multiplier ($\lambda_{HR}$), the Lagrange multiplier ($\lambda$) is set to this lower limit.

12. The method according to one of the previous claims,
wherein the method steps are implemented in a video coding standard, e.g. H.264/AVC standard.

13. Device (DD) for video coding a sequence of digitized image (I), comprising:

at least one means (M1) that is capable of performing the respective method steps of at least one of the claims 1 to 12.

# FIG 1

$$M1 \ (f_L(x), \ Q, \ F, \ R, \ D, \ S, \ H, \ P_0, \ P_n, \ P_s, \ \delta, \ \lambda_L, \ c, \ \phi, \ \gamma, \ \lambda_{HR}, \ \lambda)$$

# FIG 2

| | qp | HR-$\lambda$ | | | Lap1-$\lambda$ | | | $\Delta$PSNR [dB] |
|---|---|---|---|---|---|---|---|---|
| | | PSNR [dB] | R [Kbps] | $\lambda_{HR}$ | PSNR [dB] | R [Kbps] | $\lambda$ | |
| V1 | 28 | 37.64 | 27.55 | 34.3 | 37.47 | 23.76 | 42.72 | 0.66 |
| | 32 | 35.36 | 13.80 | 86.4 | 35.06 | 10.89 | 193.49 | |
| | 36 | 33.02 | 7.99 | 217.6 | 32.68 | 6.10 | 842.21 | |
| | 40 | 31.02 | 5.31 | 548.3 | 30.57 | 4.00 | 2577.88 | |
| V2 | 28 | 37.85 | 64.51 | 34.3 | 37.67 | 60.86 | 41.84 | 0.29 |
| | 32 | 35.24 | 37.73 | 86.4 | 34.94 | 34.06 | 121.01 | |
| | 36 | 32.72 | 22.08 | 217.6 | 32.25 | 18.38 | 358.47 | |
| | 40 | 30.49 | 13.14 | 548.3 | 29.83 | 9.57 | 1497.2 | |
| V3 | 28 | 37.13 | 96.95 | 34.3 | 36.93 | 91.25 | 59.82 | 0.11 |
| | 32 | 34.94 | 52.05 | 86.4 | 34.54 | 46.22 | 194.39 | |
| | 36 | 32.84 | 31.27 | 217.6 | 32.16 | 25.82 | 677.19 | |
| | 40 | 30.85 | 20.01 | 548.3 | 29.88 | 15.29 | 2200.77 | |
| V4 | 28 | 36.59 | 504.28 | 34.3 | 36.53 | 497.40 | 38.14 | 0.09 |
| | 32 | 33.95 | 280.96 | 86.4 | 33.72 | 263.33 | 110.29 | |
| | 36 | 31.40 | 152.77 | 217.6 | 31.02 | 134.37 | 346.93 | |
| | 40 | 29.17 | 84.78 | 548.3 | 28.55 | 67.05 | 1124.56 | |
| V5 | 28 | 37.03 | 69.94 | 34.3 | 36.92 | 67.09 | 44.7 | 0.28 |
| | 32 | 34.60 | 41.34 | 86.4 | 34.38 | 37.46 | 127.44 | |
| | 36 | 32.38 | 24.22 | 217.6 | 31.99 | 19.58 | 399.65 | |
| | 40 | 30.45 | 13.67 | 548.3 | 29.86 | 9.63 | 1359.2 | |
| V6 | 28 | 34.90 | 1492.04 | 34.3 | 34.97 | 1523.45 | 40.06 | 0.02 |
| | 32 | 32.05 | 711.35 | 86.4 | 31.98 | 694.46 | 121.15 | |
| | 36 | 29.40 | 322.32 | 217.6 | 29.11 | 291.75 | 401.25 | |
| | 40 | 27.06 | 166.27 | 548.3 | 26.44 | 142.38 | 1306.72 | |
| V7 | 28 | 35.92 | 952.59 | 34.3 | 35.95 | 962.35 | 39.29 | 0.04 |
| | 32 | 33.30 | 439.80 | 86.4 | 33.15 | 416.54 | 119.68 | |
| | 36 | 30.84 | 199.13 | 217.6 | 30.49 | 174.62 | 387.73 | |
| | 40 | 28.67 | 99.97 | 548.3 | 28.12 | 81.57 | 1493.83 | |

# FIG 3

# FIG 4

# FIG 5

| | qp | HR-$\lambda$<br>$\lambda_{HR}$ | Lap1-$\lambda$<br>$\lambda$ | $\Delta$PSNR<br>[dB] | Lap2-$\lambda$<br>$\lambda$ | $\Delta$PSNR<br>[dB] |
|---|---|---|---|---|---|---|
| V1 | 28<br>32<br>36<br>40 | 34.27<br>86.35<br>217.60<br>548.32 | 50.35<br>161.02<br>527.17<br>1855.66 | 0.67 | 79.93<br>254.16<br>808.91<br>2524.88 | 0.90 |
| V2 | 28<br>32<br>36<br>40 | 34.27<br>86.35<br>217.60<br>548.32 | 48.35<br>151.72<br>491.56<br>1597.89 | 0.27 | 76.39<br>233.49<br>739.72<br>2301.97 | 0.35 |
| V3 | 28<br>32<br>36<br>40 | 34.27<br>86.35<br>217.60<br>548.32 | 43.78<br>137.21<br>443.69<br>1487.95 | 0.08 | 51.35<br>171.30<br>572.00<br>1837.98 | 0.07 |
| V4 | 28<br>32<br>36<br>40 | 34.27<br>86.35<br>217.60<br>548.32 | 37.36<br>118.37<br>372.94<br>1209.10 | 0.10 | 54.71<br>174.33<br>547.75<br>1715.47 | 0.09 |
| V5 | 28<br>32<br>36<br>40 | 34.27<br>86.35<br>217.60<br>548.32 | 43.57<br>135.48<br>447.61<br>1566.55 | 0.24 | 62.76<br>199.74<br>667.31<br>2193.27 | 0.34 |
| V6 | 28<br>32<br>36<br>40 | 34.27<br>86.35<br>217.60<br>548.32 | 30.88<br>93.70<br>292.81<br>887.32 | 0.01 | 31.12<br>100.65<br>345.06<br>1133.07 | 0.00 |
| V7 | 28<br>32<br>36<br>40 | 34.27<br>86.35<br>217.60<br>548.32 | 32.84<br>102.77<br>319.92<br>1016.90 | 0.04 | 35.24<br>121.20<br>417.80<br>1402.81 | 0.05 |

# FIG 6

**REFERENCES CITED IN THE DESCRIPTION**

**Patent documents cited in the description**

- EP 06020948 A

**Non-patent literature cited in the description**

- **A. ORTEGA ; K. RAMCHANDRAN.** Rate-distortion methods for image and video compression. *IEEE Signal Processing Magazine,* 1998, vol. 15 (6), 23-50
- **G.J. SULLIVAN ; T. WIEGAND.** Rate-distortion optimization for video compression. *IEEE Signal Processing Magazine,* 1998, vol. 15 (6), 74-90
- **T. WIEGAND ; B. GIROD.** Lagrange multiplier selection in hybrid video coder control. *IEEE Int. Conf. on Image Processing,* 2001, vol. 3, 542-545
- **H. GISH ; J. PIERCE.** Asymptotically efficient quantizing. *IEEE Trans. Inf. Theory,* 1968, vol. 14 (5), 676-683

- **L. CHEN ; I. GARBACEA.** Adaptive lambda estimation in lagrangian rate-distortion optimization for video coding. *Visual Comm. and Image Processing,* 17 January 2006
- **Z.H. HE ; S.K. MITRA.** Optimum bit allocation and accurate rate control for video coding via $\rho$-domain source modeling. *IEEE Trans. Circuits System Video Technology,* 2002, vol. 12 (10), 840-849
- A linear source model and a unified rate control algorithm for DCT video coding. *IEEE Trans. Circuits Syst. Video Technol,* 2002, vol. 12 (11), 970-982